# FASCICULE DE BREVET EUROPEEN

(11) **EP 0 780 259 B1**
(45) Date de publication et mention de la délivrance du brevet: **22.09.1999**
(21) Numéro de dépôt: 96402494.7
(22) Date de dépôt: 20.11.1996
(51) Int. Cl.: B60N 2/00, B60N 2/10

(54) **Siège à configuration variable pour véhicule automobile**
Sitz mit veränderlicher Anordnung für Kraftfahrzeuge
Seat with variable configuration for motor vehicles

(30) Priorité: 22.12.1995 FR 9515413
(43) Date de publication de la demande: 25.06.1997
(73) Titulaire: CESA Compagnie Européenne de Sièges pour Automobiles, 92300 Levallois-Perret (FR)
(72) Inventeur: Blanchard, Jean-Marie, 45290 Nogent-sur-Vernisson (FR)
(74) Mandataire: Moncheny, Michel

(56) Documents cités:
- FR-A- 2 556 946
- FR-A- 2 625 955
- FR-A- 2 687 621
- FR-A- 2 699 973
- US-A- 5 238 285
- US-A- 5 368 355

## Description

La présente invention concerne un siège à configuration variable pour véhicule automobile.

On connaît déjà dans l'état de la technique un siège à configuration variable pour véhicule automobile, du type comprenant une armature portant une assise, un dossier et, au moins, un pied avant et un pied arrière, le dossier étant monté basculant sur l'armature entre au moins une position adaptée pour recevoir un occupant et au moins une position inadaptée pour recevoir cet occupant, l'un desdits pieds étant muni d'un verrou à billes pour la fixation du siège sur un plancher du véhicule, ce verrou comprenant une aiguille déplaçable entre des positions de verrouillage et de déverrouillage du verrou.

FR-A-2 699 973 (N°. d'enregistrement national français 92 15 857) ou FR-A-2 556 964 décrit un siège de ce type pouvant être accroché de façon amovible sur le plancher de l'habitacle d'un véhicule automobile de type monocorps. Le dossier est déplaçable dans trois positions successives adaptées pour recevoir un occupant, dites "couchette", "détente" et "normale, ainsi que dans deux positions successives inadaptées pour recevoir cet occupant, dites "tablette" et "compacte".

Habituellement, le siège est équipé d'une ceinture de sécurité comportant trois points d'ancrage portés par le siège. Pour des raisons de sécurité, il est impératif de s'assurer que, lorsque le siège est dans une position adaptée pour recevoir un occupant, le verrou est correctement accroché au plancher.

L'invention a notamment pour but de proposer un siège amovible dont l'accrochage sur le plancher soit suffisamment sûr pour résister, en cas de choc, aux efforts transmis à ce siège par la ceinture de sécurité, le siège ne pouvant pas être utilisé par un occupant s'il n'est pas accroché de façon correcte sur le plancher.

A cet effet, l'invention a pour objet un siège à configuration variable pour véhicule automobile, du type précité, caractérisé en ce que l'assise est reliée au dossier par une tringlerie mobile d'asservissement de la position de l'assise à celle du dossier, et en ce que le siège comporte de plus des moyens d'immobilisation de la tringlerie d'asservissement lorsque le dossier est dans une position inadaptée pour recevoir un occupant et l'aiguille est dans sa position de déverrouillage.

Suivant d'autres caractéristiques de l'invention:
- la tringlerie d'asservissement comporte une broche d'articulation montée coulissante dans un guide solidaire de l'armature, et les moyens d'immobilisation comprennent un crochet monté pivotant sur l'armature entre des positions d'immobilisation et de libération de la broche, et une tringlerie de transmission des déplacements de l'aiguille du verrou, reliant cette aiguille au crochet, l'aiguille étant rappelée élastiquement en position de verrouillage par des moyens s'opposant à des moyens de rappel élastique du crochet en position d'immobilisation, la force de rappel de l'aiguille étant supérieure à celle du crochet ;
- la tringlerie de transmission comprend une platine de manoeuvre du crochet, monté pivotante sur l'armature, reliée, d'une part, à l'aiguille au moyen d'une bielle, et d'autre part, au crochet au moyen d'un bras solidaire en rotation de ce crochet ;
- le bras est relié à la platine au moyen d'une lumière ménagée dans cette platine et permettant une course morte de la platine et de l'aiguille par rapport au crochet ;
- l'un desdits pieds est monté pivotant sur l'armature entre des positions active et escamotée, la bielle de transmission étant reliée à la platine au moyen d'une boutonnière d'extrémité de cette bielle permettant une course morte de la bielle de transmission par rapport à la platine lors du pivotement du pied ;
- le siège comprend des moyens de commande du déverrouillage du verrou comportant un levier de commande monté pivotant sur le dossier entre une position de repos, vers laquelle le levier est sollicité élastiquement, et une position active, le levier de commande étant relié à l'aiguille du verrou par une tringlerie de commande ;
- la tringlerie de commande comprend une tringlerie intermédiaire reliant le levier de commande à la platine de manoeuvre ;
- la tringlerie intermédiaire est reliée à la platine au moyen d'une boutonnière ménagée dans cette platine et permettant une course morte de cette tringlerie intermédiaire par rapport à la platine, cette course morte autorisant, lorsque l'aiguille est en position déverrouillée, le retour du levier de commande en position de repos;
- le siège comprend des moyens de blocage du levier de commande lorsque le dossier est dans une position adaptée pour recevoir un occupant;
- les moyens de blocage comprennent une broche d'articulation de la tringlerie de commande montée déplaçable dans deux boutonnières de blocage mobiles l'une par rapport à l'autre et portées l'une par l'armature et l'autre par le levier, l'orientation relative des boutonnières de blocage étant compatible avec un déplacement de la broche d'articulation qu'elles guident uniquement lorsque le dossier est dans une position inadaptée pour recevoir un occupant ;
- l'un desdits pieds forme le premier de deux pieds latéraux portés par l'armature, chaque pied étant muni d'un même verrou à billes, la tringlerie intermédiaire du premier pied étant relié à un bras de manivelle monté pivotant sur l'armature et lié en rotation avec une barre de couplage de la tringlerie intermédiaire avec une tringlerie de commande associée au verrou du second pied ;
- les deux pieds latéraux forment des pieds arrière du siège articulés sur l'armature, le siège comportant en outre deux pieds avant, également articulés sur l'armature, et des moyens d'asservissement de la position relative des pieds arrière par rapport à l'armature à la position relative des pieds avant par rapport à cette armature ;
- le dossier est déplaçable dans deux positions successives adaptées pour recevoir un occupant ;
- le dossier est déplaçable dans deux positions successives inadaptées pour recevoir un occupant.

L'invention sera mieux comprise à la lecture de la description qui va suivre donnée uniquement à titre d'exemple et faite en se référant aux dessins annexés dans lesquels :
- les figures 1 à 6 sont des vues schématiques en élévation d'un siège selon l'invention dans différentes configurations ;
- la figure 7 est une vue en perspective éclatée d'une partie du siège montrant notamment l'armature et un pied de ce siège ;
- la figure 8 est une vue de détail de la partie cerclée 8 de la figure 7 ;
- les figures 9 à 11 sont des vues de côté de la partie du siège représentée sur la figure 7, dans différentes configurations de ce siège ;
- les figures 12 à 14 sont des vues schématiques de détail des boutonnières de blocage du levier de commande, dans différentes positions relatives de ces boutonnières ;
- les figures 15 et 16 sont des vues en coupe axiale du verrou, respectivement en position déverrouillée et en position verrouillée ;
- les figures 17 et 18 sont des vues partielles de côté du siège selon l'invention respectivement dans deux configurations différentes de ce siège.

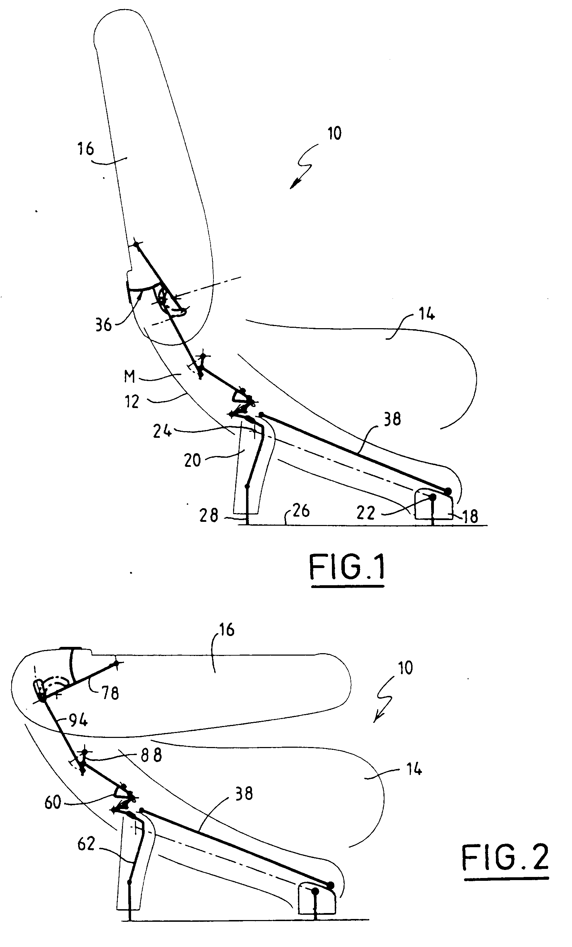

On a représenté sur les figures 1 à 6 un siège à configuration variable pour véhicule automobile, désigné par la référence générale 10.

Dans ce qui suit, les orientations avant, arrière, gauche et droite correspondent aux orientations habituelles d'un occupant assis dans le siège 10.

Le siège 10 comporte une armature 12 munie de deux membrures latérales M en caisson, portant une assise 14, un dossier 16, deux pieds latéraux avant 18 et deux pieds latéraux arrière 20.

L'assise 14 est montée de façon mobile sur l'armature 12, comme cela sera décrit plus en détail ultérieurement.

Le dossier 16 est monté basculant sur les membrures M de l'armature au moyen d'une articulation classique, telle que décrite, par exemple, dans FR-A-2 687 621 (N°. d'enregistrement national français 92 02 172).

Le dossier 16 est déplaçable entre au moins une position adaptée pour recevoir un occupant et au moins une position inadaptée pour recevoir cet occupant. Dans l'exemple décrit, le dossier 16 est déplaçable dans deux position successives adaptées pour recevoir un occupant et deux positions successives inadaptées pour recevoir cet occupant.

Une première position adaptée pour recevoir un occupant, dite "normale", est représentée sur la figure 1 et permet, notamment, la conduite du véhicule. La seconde position adaptée pour recevoir un occupant, dite de "détente" n'est pas représentée sur les figures. Dans cette seconde position, le dossier est incliné vers l'arrière par rapport à la première position.

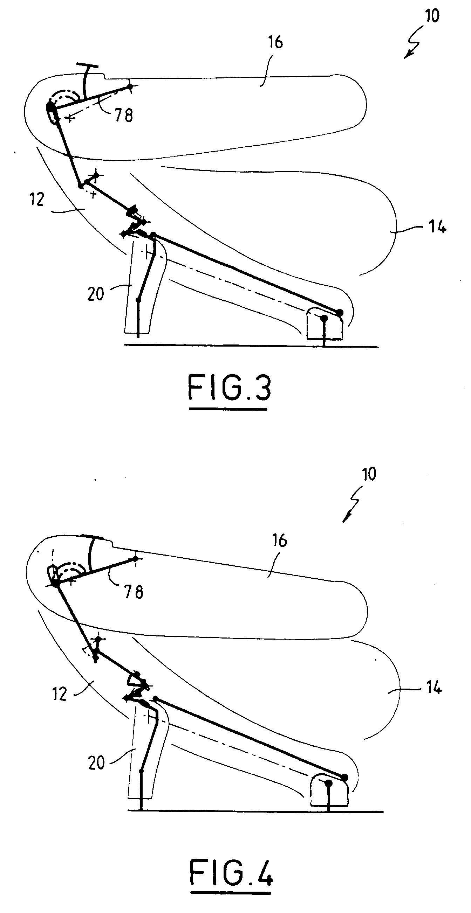

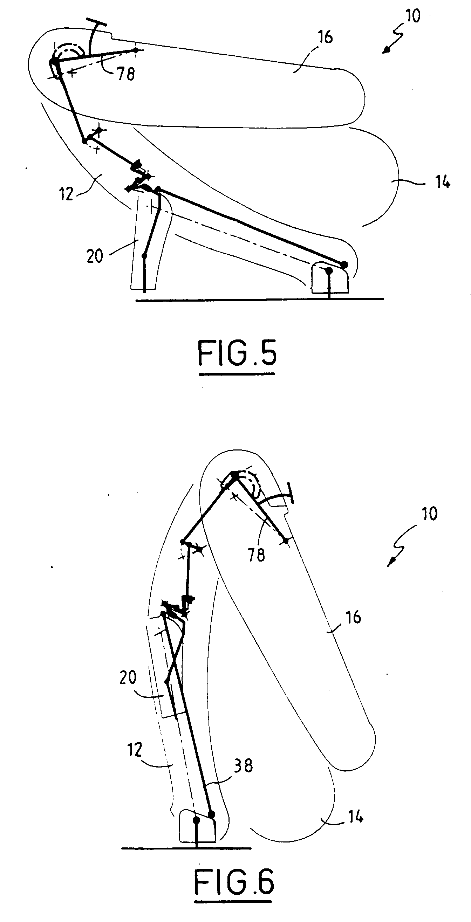

Les deux positions inadaptées pour recevoir un occupant, dites "tablette" et "compacte", sont obtenues par basculement d'arrière en avant du dossier 16 à partir de sa position "normale" et sont représentées la première sur les figures 2 et 3, et la seconde sur les figures 4 et 5.

Les pieds avant 18 et arrière 20 sont montés pivotant sur les membrures M de l'armature 12 au moyen d'articulations classiques 22,24.

Le siège 10 est accroché de façon amovible sur un plancher 26 de l'habitacle du véhicule au moyen de quatre verrous à billes classiques portés par les quatre pieds du siège.

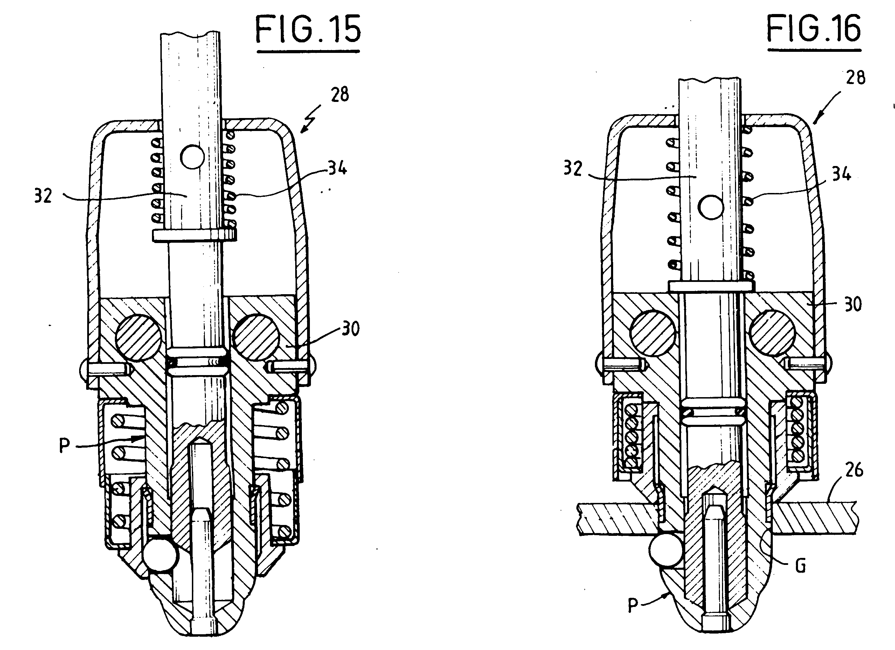

Sur les figures 15 et 16, on a représenté un des deux verrous identiques 28 portés par les pieds arrière 20 du véhicule. La structure et le fonctionnement de ce verrou sont décrits en détail par exemple dans la demande de brevet français FR-A-2 735 174 (N°. d'enregistrement national 95 06 868) au nom de la demanderesse (ce document a été publié le 13 décembre 1996, tandis que la demande de brevet européen correspondante EP-A-0 747 554 a été publiée le 11 décembre 1996, c'est-à-dire après la date de prioriter de la présente demande).

Le verrou 28 comporte un pêne P portant les billes, destiné à être verrouillé par encliquetage dans un orifice de verrouillage formant gâche G ménagé dans le plancher 26.

Le pêne P comprend un corps de verrouillage 30, fixé sur le pied arrière correspondant, et une aiguille 32 déplaçable entre des positions de déverrouillage et de verrouillage du verrou représentées respectivement aux figures 15 et 16.

L'aiguille 32 est rappelée élastiquement en position de verrouillage par un ressort de compression 34.

Les verrous 28 des pieds arrière peuvent être déverrouillés à l'aide de moyens de commande 36 activables uniquement lorsque le siège 10 est dans une position inadaptée pour recevoir un occupant, comme cela est représenté sur les figures 3 et 5.

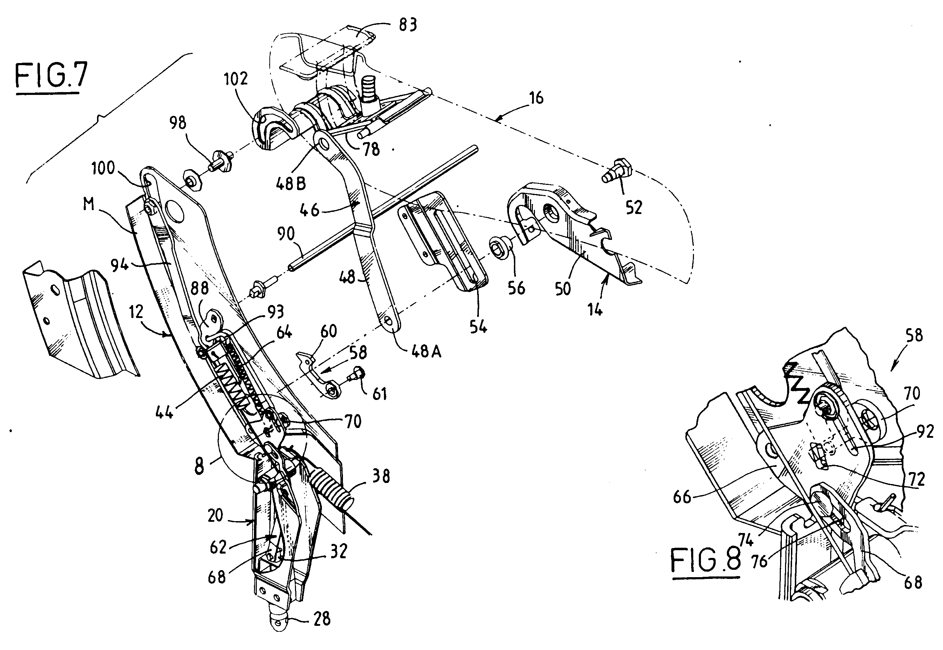

Les moyens de commande 36, qui sont représentés plus en détail sur les figures 7 à 11, seront décrits ultérieurement.

Sur la figure 6, on a représenté le siège dans une configuration repliée d'encombrement au plancher réduit dans laquelle seuls les deux pieds avant 18 sont accrochés au plancher. Cette configuration repliée est obtenue en plaçant le dossier 16 du siège en position "tablette" ou "compacte" (voir figure 2 ou 4), en déverrouillant les pieds arrière 20 (voir figure 3 ou 5), puis en faisant basculer le siège 10 autour de l'axe de pivotement matérialisé par les articulations 22 reliant les pieds avant 18 aux membrures M de l'armature.

Pour des raisons de symétrie entre les parties droite et gauche du siège 10, on ne décrira ci-dessous que la partie droite de ce siège.

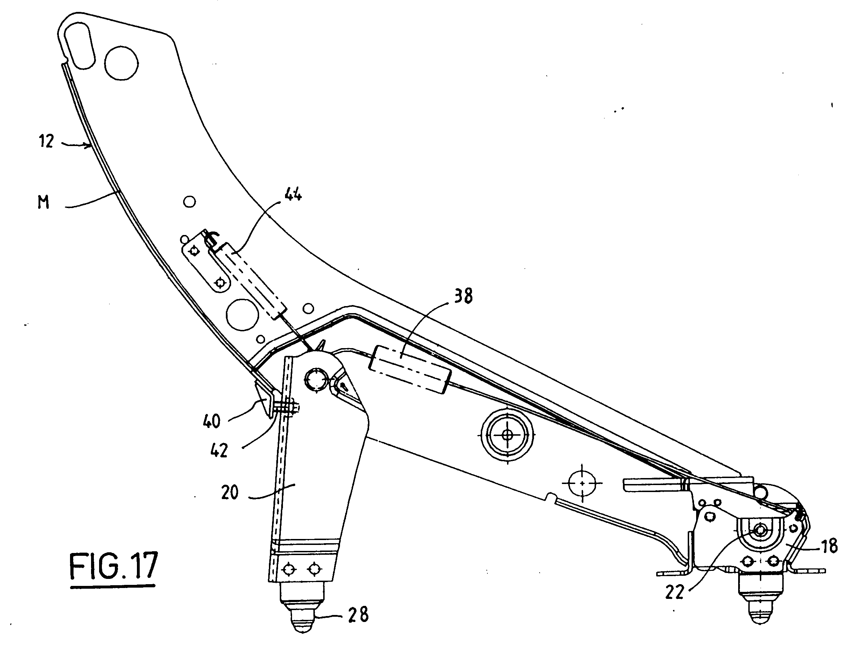

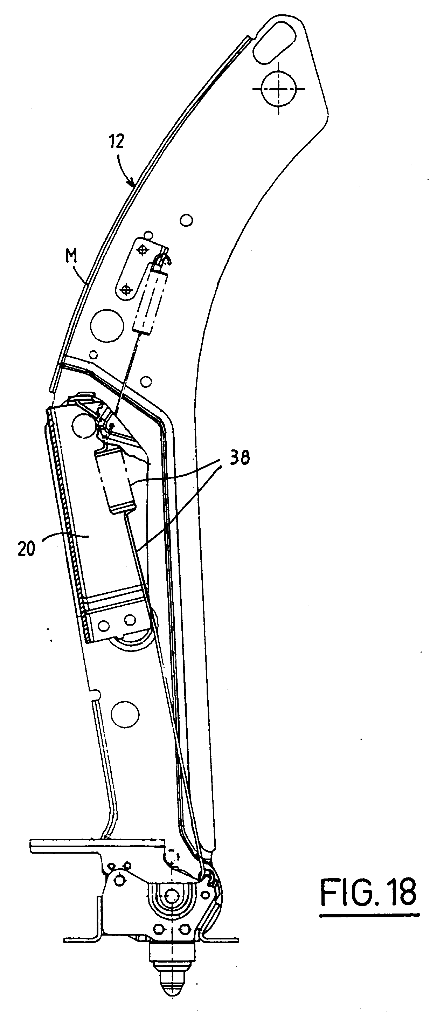

En se référant notamment aux figures 17 et 18, on voit que la position relative du pied arrière 20 par rapport à l'armature 12 est asservie à la position relative du pied avant 18 par rapport à cette armature au moyen d'un organe de liaison 38 articulé par ses extrémités sur chacun des pieds 18,20.

On notera que les articulations 22,24 des pieds avant 18 et arrière 20 ainsi que les extrémités articulées de l'organe 38 définissent un quadrilatère déformable.

Sous l'effet de la déformation de ce quadrilatère, le pied arrière 20 est déplaçable entre une position active d'accrochage du siège 10 sur le plancher, telle que représentée notamment sur les figures 1 et 17, et une position escamotée dans une membrure M de l'armature, telle que représentée notamment sur les figures 6 et 18.

De préférence, l'organe 38 est constitué par un ressort de traction de raideur élevée, comme cela est représenté sur les figures 17 et 18.

Lorsque le pied arrière 20 est en position active, le ressort 38 est tendu et sollicite ce pied arrière contre une butée 40 de positionnement solidaire de l'armature 12. Cette butée 40 coopère avec l'extrémité d'une vis 42 portée par le pied arrière 20. Cette vis 42 permet de régler la position active du pied arrière 20 pour obtenir, lors du verrouillage, une position relative correcte du pêne P et de la gâche G sans recourir à des tolérances de fabrication sévères.

Lorsque le pied arrière 20 est en position escamotée, le ressort 38 est entièrement détendu, voire légèrement fléchi, le pied arrière étant rappelé élastiquement vers sa position escamotée par un ressort de traction 44 accroché entre ce pied et la membrure M qui le porte. La raideur du ressort 44 est inférieure à celle du ressort 38.

En variante, l'organe 38 peut être constitué par une tringle.

En se référant à la figure 7, dans laquelle le dossier 16 est dans sa position "tablette" correspondant à celle de la figure 2, on voit que l'assise 14 est reliée au dossier 16 par une tringlerie mobile 46 d'asservissement de la position de l'assise 14 à celle du dossier 16.

La tringlerie d'asservissement 46 comprend une bielle 48 munie d'une première extrémité 48A articulée sur une armature 50 de l'assise 14, au moyen d'une broche d'articulation 52, et d'une seconde extrémité 48B articulée sur une armature du dossier 16, non représentée sur les figures.

La broche 52 est montée coulissante dans un guide rectiligne 54 fixé sur l'armature 12. On notera que la broche 52 est logée libre en rotation dans un manchon 56 de contact avec le guide 54.

Le siège 10 comporte de plus des moyens 58 d'immobilisation de la tringlerie d'asservissement 46 lorsque le dossier 16 est dans une position inadaptée pour recevoir un occupant et l'aiguille 32 est dans une position de déverrouillage.

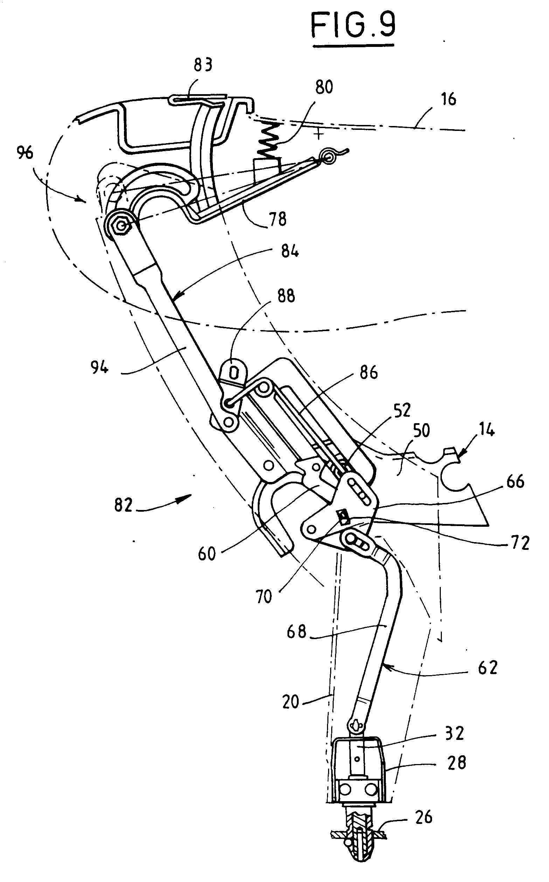

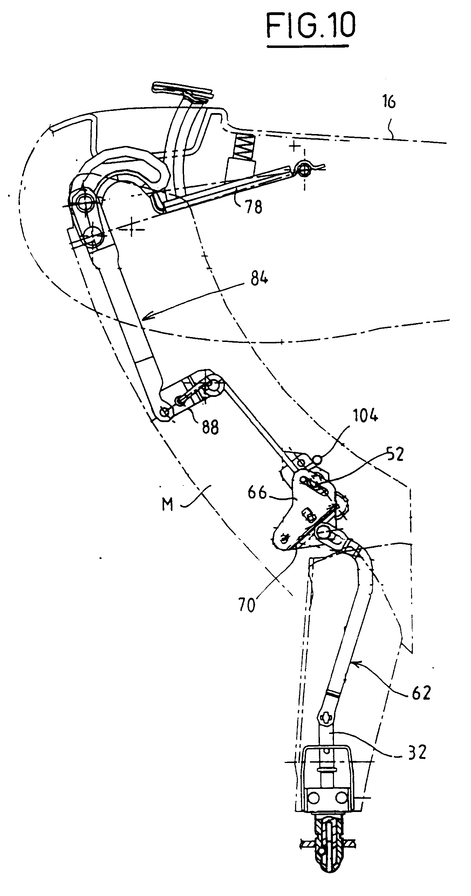

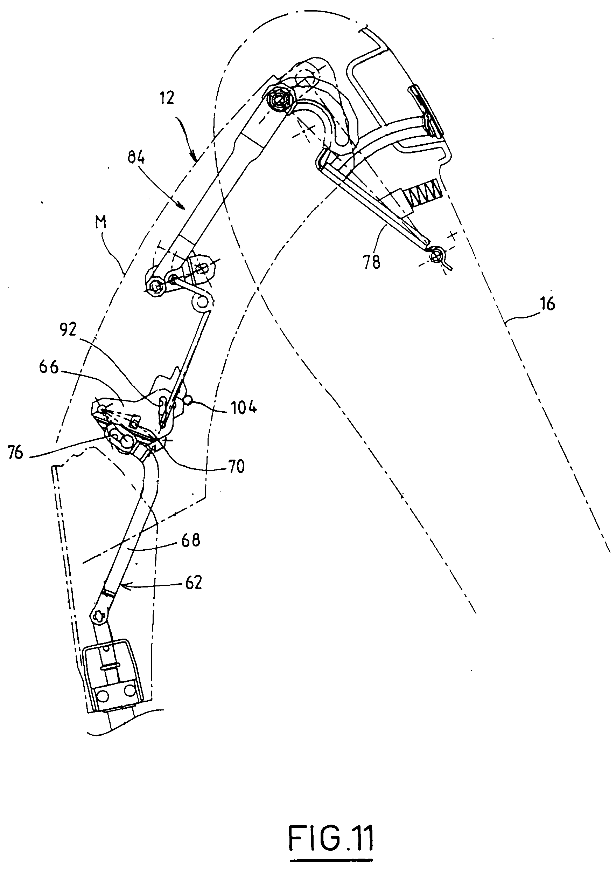

Ces moyens 58, illustrés sur les figures 7 à 11, comprennent un crochet 60 monté pivotant, au moyen d'un pion 61, sur la membrure M de l'armature entre une position de libération de la broche 52, telle que représentée sur la figure 9, et une position d'immobilisation de cette broche 52, telle que représentée sur les figures 10 et 11.

Les moyens d'immobilisation 58 comprennent de plus une tringlerie 62 de transmission des déplacements de l'aiguille 32 reliant cette aiguille 32 au crochet 60.

Le ressort 34 de rappel de l'aiguille 32 s'oppose à un ressort 64 de rappel élastique du crochet 60 en position d'immobilisation. La raideur du ressort 34 est supérieure à la raideur du ressort 64, si bien que la force de rappel de l'aiguille 32 est supérieure à celle du crochet 60.

La tringlerie de transmission 62 comprend une platine 66 de manoeuvre du crochet 60, montée pivotante sur la membrure M de l'armature. La platine 66 est reliée, d'une part, à l'aiguille 32 au moyen d'une bielle coudée 68, et d'autre part, au crochet 60 au moyen d'un bras 70 solidaire en rotation de ce crochet.

Le bras 70 comporte une extrémité libre de liaison avec la platine 66 logée avec jeu dans une lumière rectangulaire 72 ménagée dans la platine. Cette lumière 72 permet une course morte de la platine 66 et de l'aiguille 32 par rapport au crochet 60.

La bielle de transmission 68 est reliée à la platine 66 au moyen d'un pion 74, solidaire de la platine 66, monté coulissant dans une boutonnière d'extrémité 76 de la bielle 68. Cette boutonnière 76 permet une course morte de la bielle 68 par rapport à la platine 66 lors du pivotement du pied arrière 20 entre ses positions active et escamotée.

L'organe de liaison 38, la tringlerie d'asservissement 46 et les moyens 58 d'immobilisation de cette tringlerie sont agencés symétriquement dans chaque partie droite et gauche du siège.

Les moyens 36 de commande du déverrouillage des verrous 28 des deux pieds arrière comprennent un levier de commande 78 commun monté pivotant sur le dossier 16 entre une position de repos, telle que représentée sur la figure 9, vers laquelle levier 78 est sollicité élastiquement par un ressort 80, et une position active, telle que représentée notamment sur la figure 10.

Le levier de commande 78 est relié aux aiguilles 32 des verrous 28 par une tringlerie de commande 82.

Le levier de commande 78 est muni d'une poignée de manoeuvre 83 accessible depuis la partie arrière du dossier 16.

La tringlerie de commande 82 comporte une tringlerie intermédiaire 84, dont une partie est commune aux deux verrous 28, reliant le levier de commande 78 à la platine de manoeuvre 66.

La tringlerie intermédiaire 84 comprend, associée à chaque verrou 28, une tringle coudée 86, en fil métallique plié, reliant la platine 66 à un bras 88 de manivelle monté pivotant sur la membrure M d'armature correspondante. Le bras 88 est lié en rotation à une barre 90 de couplage des éléments de tringlerie de commande associés à chaque verrou 28.

La tringle coudée 86 est reliée à la platine 66 au moyen d'une boutonnière 92 ménagée dans cette platine, permettant une course morte de la tringle 86 par rapport à la platine 66.

Cette course morte autorise, lorsque l'aiguille 32 du verrou correspondant est en position de déverrouillage, le retour du levier de commande 78 en position de repos.

On notera que le ressort 64 de rappel du crochet 60 est relié, d'une part, à une boucle 93 formant le coude de la tringle 86, et d'autre part, au bras 70.

Bien entendu, la tringle coudée 86 et la manivelle 88 sont agencées symétriquement dans chaque partie droite et gauche du siège 10.

La tringlerie intermédiaire 88 comprend de plus une bielle rectiligne 94, commune aux deux verrous 28, munie d'une première extrémité reliée au bras droit 88 de manivelle et d'une seconde extrémité reliée au levier de commande 78 par l'intermédiaire de moyens 96 de blocage de ce levier de commande 78 en position de repos, lorsque le dossier 16 est dans une position adaptée pour recevoir un occupant.

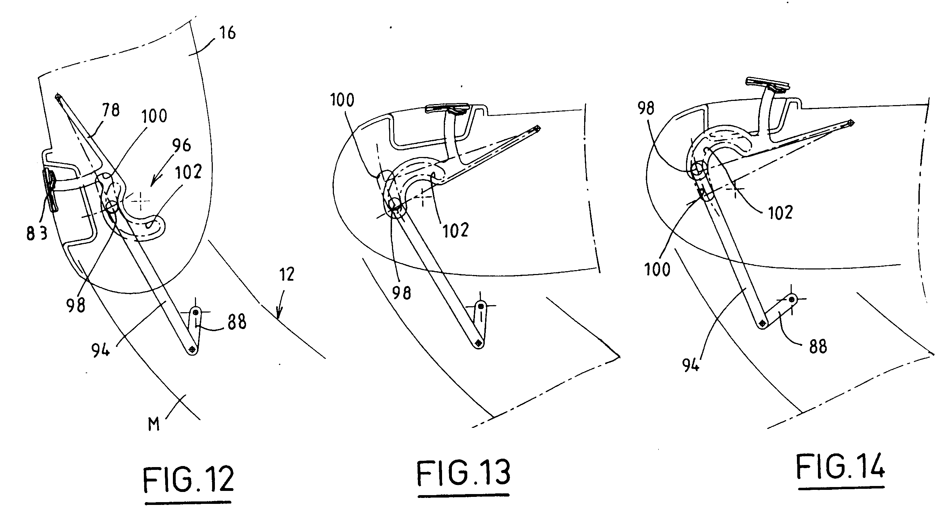

En se référant notamment à la figure 7 et aux figures 12 à 14, on voit que les moyens de blocage comprennent une broche d'articulation 98, portée par la seconde extrémité de la bielle 94, montée déplaçable dans deux boutonnières de blocage 100,102 mobiles l'une par rapport à l'autre.

Une première boutonnière 100, sensiblement rectiligne, est ménagée dans la membrure droite M de l'armature. La seconde boutonnière 102, de forme générale curviligne, est ménagée dans une ferrure solidaire du levier de commande 78.

En se référant aux figures 12 à 14, on voit que l'orientation relative des boutonnières de blocage 100,102 est compatible avec un déplacement de la broche 98 d'articulation qu'elles guident uniquement lorsque le dossier 16 est dans une position inadaptée pour recevoir un occupant, notamment dans la position tablette, telle que représentée sur les figures 13 et 14. Lorsque le dossier 16 est dans une position "normale", comme cela est représenté sur la figure 12, la broche d'articulation 98 est immobilisée bloquant ainsi le levier de commande 78 en position de repos.

On décrira ci-dessous le fonctionnement du siège 10 selon l'invention. Pour cela, on décrira tout d'abord la séparation du siège 10 du plancher 26, puis la mise en place de ce siège sur le plancher 26.

Initialement, le siège 10 est accroché sur le plancher 26, comme cela est représenté sur les figures 1 et 17. En particulier, les verrous 28 des pieds arrière 20 sont verrouillés dans le plancher 26, comme cela est représenté sur la figure 16.

Le dossier 16 est dans sa position "normale", sensiblement verticale, adaptée pour recevoir un passager.

En se référant à la figure 12, on voit que dans ce cas, la position relative des boutonnières de blocage 100,102 interdit le déplacement du levier de commande 78 et de la broche d'articulation 98. Le levier de commande 78 est donc immobilisé en position de repos.

Pour permettre la libération du levier de commande 78, il est nécessaire de rabattre le dossier 16 dans une position inadaptée pour recevoir un occupant, par exemple la position "tablette" illustrée sur les figures 2,7 et 9.

Dans ce cas, la position relative des boutonnières de blocage 100,102 est celle représentée à la figure 13. Cette position relative autorise le déplacement du levier 78, par traction de la poignée 83 à l'écart du dossier 16, depuis sa position de repos illustrée à la figure 13 jusqu'à sa position active illustrée à la figure 14. Au cours du déplacement du levier de commande 78, la broche d'articulation 98 parcourt la longueur de la boutonnière 100 portée par la membrure M de l'armature.

Pour les raisons de symétrie déjà précisées, on ne considérera ci-dessous que la partie droite du siège.

Le déplacement du levier de commande 78 vers sa position active provoque, via la tringlerie intermédiaire 84, la platine 66 et la tringlerie de transmission 62, le soulèvement de l'aiguille 32 du verrou 28 depuis sa position de verrouillage, illustrée aux figures 9 et 16, vers sa position de déverrouillage, illustrée à la figure 10. On peut alors libérer le verrou 28 et séparer le pied arrière 20 du plancher 26.

Selon le fonctionnement classique du verrou 28, l'aiguille 32 est maintenue automatiquement en position de déverrouillage comme cela est illustré sur la figure 15.

Le pivotement vers le haut de la platine 66, qui s'opère sous l'effet de la traction de la tringlerie intermédiaire 84, provoque le déplacement du crochet 60 depuis sa position de libération de la broche 52, telle qu'illustrée sur la figure 9, vers sa position d'immobilisation de cette broche, telle qu'illustrée sur la figure 10. Cette dernière position du crochet 60 est éventuellement imposée par une butée 104 solidaire de la membrure M de l'armature.

Lorsque le crochet 60 est en position d'immobilisation, la tringlerie d'asservissement 46 est immobilisée, ce qui empêche le déplacement du dossier 16 par rapport à l'assise.

On notera que la course morte de la platine 66 par rapport au crochet 60, imposée par la lumière rectangulaire 72, retarde le déplacement du crochet 60 vers sa position d'immobilisation par rapport au déplacement du levier de commande 78.

On notera également qu'après avoir effectué le déverrouillage du verrou 28, et après avoir relâché le levier de commande 78, celui-ci revient automatiquement en position de repos sous l'effet du ressort de rappel 80. La boutonnière 92 de la platine 66 autorise le retour du levier de commande 78 en position de repos lorsque l'aiguille 32 est en position de déverrouillage.

Le siège 10 est ensuite placé dans sa configuration repliée d'encombrement au plancher réduit, telle que représentée aux figures 6,11 et 18, par basculement de l'armature 12 autour de l'axe de pivotement matérialisé par les articulations 22 reliant les pieds avant 18 aux membrures M de l'armature.

Lors de cette opération, le pied arrière 20 se déplace automatiquement vers sa position escamotée dans la membrure M correspondante de l'armature sous l'effet de l'organe de liaison 38 et du ressort de rappel 44.

On notera que la boutonnière 76 de la bielle coudée 68 permet une course morte de cette bielle par rapport à la platine 66 lorsque le pied arrière 20 se déplace vers sa position escamotée.

Pour séparer l'ensemble du siège 10 du plancher 26, il suffit de déverrouiller les verrous des pieds avant 18 à l'aide de moyens connus en soi décrits et illustrés par exemple dans la demande de brevet français n° FR-A-2 728 317 (N°. d'enregistrement national 94 15 133 au nom de la demanderesse (ce document a été publié le 21 juin 1996, tandis que la demande de brevet européen correspondante EP-A-0 716 950 a été publiée le 19 juin 1996, c'est-à-dire aprés la date de priorité de la présente demande).

La mise en place et l'accrochage du siège 10 selon l'invention sur le plancher 26 se fait selon des opérations inverses de celles décrites précédemment.

On notera cependant qu'au cours de l'accrochage d'un verrou 28 de pied arrière, la lumière rectangulaire 72 permet une descente complète de l'aiguille 32 de ce verrou vers sa position de verrouillage, avant déplacement du crochet 60 correspondant vers sa position de libération de la broche d'articulation 52. Ainsi, le déblocage du dossier 16 n'a lieu que lorsque l'aiguille 32 de chacun des verrous a atteint sa position de déverrouillage.

On notera de plus que si l'aiguille 32 d'un des deux verrous 28 n'est pas dans sa position de verrouillage, le déblocage du dossier 16 ne peut pas avoir lieu.

On notera également que la boutonnière 92 de la platine 66 assure l'indépendance des positions des aiguilles 32 des deux verrous 28.

L'invention comporte de nombreux avantages.

En particulier, elle permet d'accrocher de façon très sûre un siège de configuration variable sur le plancher de l'habitacle. En effet, en cas de défaut d'accrochage des pieds arrière de ce siège, le dossier est immobilisé dans une position inadaptée pour recevoir un occupant, si bien que le siège est inutilisable tant que l'on n'a pas remédié à ce défaut.

On évite ainsi les risques encourus par un occupant installé dans un siège qui n'est pas accroché de façon correcte sur le plancher.

## Revendications

1. Siège à configuration variable pour véhicule automobile, du type comprenant une armature (12) portant une assise (14), un dossier (16) et, au moins, un pied avant et un pied arrière (20), le dossier (16) étant monté basculant sur l'armature (12) entre au moins une position adaptée pour recevoir un occupant et au moins une position inadaptée pour recevoir cet occupant, l'un desdits pieds (20) étant muni d'un verrou à billes (28) pour la fixation du siège sur un plancher (26) du véhicule, ce verrou comprenant une aiguille (32) déplaçable entre des positions de verrouillage et de déverrouillage du verrou, caractérisé en ce que l'assise (14) est reliée au dossier (16) par une tringlerie mobile (46) d'asservissement de la position de l'assise (14) à celle du dossier (16), et en ce que le siège comporte de plus des moyens (58) d'immobilisation de la tringlerie d'asservissement (46) lorsque le dossier (16) est dans une position inadaptée pour recevoir un occupant et l'aiguille (32) est dans sa position de déverrouillage.

2. Siège selon la revendication 1, caractérisé en ce que la tringlerie d'asservissement (46) comporte une broche d'articulation (52) montée coulissante dans un guide (54) solidaire de l'armature (12), et en ce que les moyens d'immobilisation (58) comprennent un crochet (60) monté pivotant sur l'armature (12) entre des positions d'immobilisation et de libération de la broche (52), et une tringlerie (62) de transmission des déplacements de l'aiguille (32) du verrou (28), reliant cette aiguille (32) au crochet (60), l'aiguille (32) étant rappelée élastiquement en position de verrouillage par des moyens (34) s'opposant à des moyens (64) de rappel élastique du crochet (60) en position d'immobilisation, la force de rappel de l'aiguille (32) étant supérieure à celle du crochet (60).

3. Siège selon la revendication 2, caractérisé en ce que la tringlerie de transmission (62) comprend une platine (66) de manoeuvre du crochet (60), monté pivotante sur l'armature (12), reliée, d'une part, à l'aiguille (32) au moyen d'une bielle (68), et d'autre part, au crochet (60) au moyen d'un bras (70) solidaire en rotation de ce crochet.

4. Siège selon la revendication 3, caractérisé en ce que le bras (70) est relié à la platine (66) au moyen d'une lumière (72) ménagée dans cette platine et permettant une course morte de la platine (66) et de l'aiguille (32) par rapport au crochet (60).

5. Siège selon la revendication 3 ou 4, caractérisé en ce que l'un desdits pieds (20) est monté pivotant sur l'armature (12) entre des positions active et escamotée, la bielle de transmission (68) étant reliée à la platine (66) au moyen d'une boutonnière d'extrémité (76) de cette bielle permettant une course morte de la bielle de transmission (68) par rapport à la platine (66) lors du pivotement du pied (20).

6. Siège selon l'une quelconque des revendications précédentes, caractérisé en ce qu'il comprend des moyens (36) de commande du déverrouillage du verrou (28) comportant un levier de commande (78) monté pivotant sur le dossier (16) entre une position de repos, vers laquelle le levier (78) est sollicité élastiquement, et une position active, le levier de commande (78) étant relié à l'aiguille (32) du verrou par une tringlerie de commande (82).

7. Siège selon la revendication 6, caractérisé en ce que la tringlerie de commande (82) comprend une tringlerie intermédiaire (84) reliant le levier de commande (78) à la platine de manoeuvre (66).

8. Siège selon la revendication 7, caractérisé en ce que la tringlerie intermédiaire (84) est reliée à la platine (66) au moyen d'une boutonnière (92) ménagée dans cette platine et permettant une course morte de cette tringlerie intermédiaire (84) par rapport à la platine, cette course morte autorisant, lorsque l'aiguille (32) est en position déverrouillée, le retour du levier de commande (78) en position de repos.

9. Siège selon l'une quelconque des revendications 6 à 8, caractérisé en ce qu'il comprend des moyens (96) de blocage du levier de commande (78) lorsque le dossier (16) est dans une position adaptée pour recevoir un occupant.

10. Siège selon la revendication 9, caractérisé en ce que les moyens de blocage (96) comprennent une broche d'articulation (98) de la tringlerie de commande (82) montée déplaçable dans deux boutonnières (100,102) de blocage mobiles l'une par rapport à l'autre et portées l'une par l'armature (12) et l'autre par le levier (78), l'orientation relative des boutonnières de blocage (100, 102) étant compatible avec un déplacement de la broche d'articulation (98) qu'elles guident uniquement lorsque le dossier (16) est dans une position inadaptée pour recevoir un occupant.

11. Siège selon l'une quelconque des revendications 7 à 10, caractérisé en ce que l'un desdits pieds forme le premier de deux pieds latéraux (20) portés par l'armature (12), chaque pied (20) étant muni d'un même verrou à billes (28), la tringlerie intermédiaire (84) du premier pied (20) étant relié à un bras (88) de manivelle monté pivotant sur l'armature (12) et lié en rotation avec une barre (90) de couplage de la tringlerie intermédiaire avec une tringlerie de commande associée au verrou (28) du second pied (20).

12. Siège selon la revendication 11, caractérisé en ce que les deux pieds latéraux (20) forment des pieds arrière du siège articulés sur l'armature, le siège comportant en outre deux pieds avant (18), également articulés sur l'armature, et des moyens (38) d'asservissement de la position relative des pieds arrière (20) par rapport à l'armature à la position relative des pieds avant (18) par rapport à cette armature.

13. Siège selon l'une quelconque des revendications précédentes, caractérisé en ce que le dossier (16) est déplaçable dans deux positions successives adaptées pour recevoir un occupant.

14. Siège selon l'une quelconque des revendications précédentes, caractérisé en ce que le dossier est déplaçable dans deux positions successives inadaptées pour recevoir un occupant.

## Claims

1. A seat with variable configuration for a motor vehicle, of the type comprising a frame (12) carrying a seat bottom (14), a back (16) and at least one front foot and one back foot (20), the back (16) being mounted to tilt on the frame (12) between at least one position adapted to receive an occupant and at least one position not adapted to receive the occupant, one of the said feet (20) being provided with a ball catch (28) for fixing the seat on a floor (26) of the vehicle, this catch comprising a pin (32) which can be moved between locking and unlocking positions of the catch, characterized in that the seat bottom (14) is connected to the back (16) by a movable linkage (46) for coupling the position of the seat bottom (14) to that of the back (16), and in that the seat further comprises means (58) for immobilising the coupling linkage (46) when the back (16) is in a position not adapted to receive an occupant and the pin (32) is in its unlocking position.

2. A seat according to claim 1, characterized in that the controlling linkage (46) comprises a hinge pin (52) mounted slidably within a guide (54) fixed to the frame (12), and in that the immobilising means (58) comprise a hook (60) mounted on the frame (12) to pivot between positions immobilising and freeing the hinge pin (52), and a linkage (62) for transmitting displacements of the pin (32) of the catch (28), connecting this pin (32) to the hook (60), the pin (32) being biased resiliently into the locking position by means (34) opposing resilient means (64) biasing the hook (60) into the immobilising position, the force biasing the pin (32) being greater than that of the hook (60).

3. A seat according to claim 2, characterized in that the transmitting linkage (62) comprises a plate (66) for operating the hook (60), pivotally mounted on the frame (12), connected for one part to the pin (32) by means of a link rod (68) and for the other part to the hook (60) by means of an arm (70) which rotates integrally with the hook.

4. A seat according to claim 3, characterized in that the arm (70) is connected to the plate (66) by means of an opening (72) formed in this plate and allowing lost motion of the plate (66) and the pin (32) relative to the hook (60).

5. A seat according to claim 3 or 4, characterized in that one of the said feet (20) is mounted on the frame (12) to pivot between active and retracted positions, the transmitting link rod (68) being connected to the plate (66) by means of a slot (76) at the end of this link rod allowing lost motion of the transmitting link rod (68) relative to the plate (66) during the pivoting of the foot (20).

6. A seat according to any of the preceding claims, characterized in that it comprises means (36) controlling the unlocking of the catch (28), comprising a control lever (78) mounted on the back (16) to pivot between a rest position, to which the lever (78) is biased resiliently, and an active position, the control lever (78) being connected to the pin (32) of the catch by a control linkage (82).

7. A seat according to claim 6, characterized in that the control linkage (82) comprises an intermediate linkage (84) connecting the control lever (78) to the operating plate (66).

8. A seat according to claim 7, characterized in that the intermediate linkage (84) is connected to the plate (66) by means of a slot (92) formed in the this plate and allowing lost motion of this intermediate linkage (84) relative to the plate, this lost motion allowing the return of the control lever (78) to the rest position when the pin (32) is in the unlocking position.

9. A seat according to any of claims 6 to 8, characterized in that it comprises means (96) for blocking the control lever (78) when the back (16) is in a position adapted to receive an occupant.

10. A seat according to claim 9, characterized in that the blocking means (96) comprise a hinge pin (98) of the control linkage (82) mounted to move in two blocking slots (100, 102) movable with respect to one another and carried one by the frame (12) and the other by the lever (78), the relative orientation of the blocking slots (100, 102) being compatible with movement of the hinge pin (98) which they guide solely when the back (16) is in a position not adapted to receive an occupant.

11. A seat according to any of claims 7 to 10, characterized in that one of the said feet forms the first of two side feet (20) carried by the frame (12), each foot (20) being provided with a like ball catch (28), the intermediate linkage (84) of the first foot (20) being connected to a crank arm (88) pivotally mounted on the frame (12) and connected to rotate with a rod (90) coupling the intermediate linkage to a control linkage associated with the catch (28) of the second foot (20).

12. A seat according to claim 11, characterized in that the two side feet (20) form rear feet of the seat, articulated to the frame, the seat further comprising two front feet (18), also articulated to the frame, and means (38) coupling the position of the rear feet (20) relative to the frame to the position of the front feet (18) relative to this frame.

13. A seat according to any of the preceding claims, characterized in that the back (16) can be moved between two successive positions adapted to receive an occupant.

14. A seat according to any of the preceding claims, characterized in that the back is movable between two successive positions not adapted to receive an occupant.

## Patentansprüche

1. Sitz mit veränderlicher Anordnung für ein Kraftfahrzeug von einer Art, die ein Sitzgestell (12) mit einer Sitzfläche (14), einer Rückenlehne (16) und mindestens einem vorderen Fußteil und einem hinteren Fußteil (20) aufweist, wobei die Rückenlehne (16) an dem Sitzgestell (12) zwischen mindestens einer Position, die geeignet ist, einen Fahrgast aufzunehmen, und einer Position, die nicht geeignet ist, einen Fahrgast aufzunehmen, schwenkbar montiert ist, wobei einer der Fußteile (20) mit einem Schloßriegel (28) für die Befestigung des Sitzes am Boden (26) eines Fahrzeugs ausgestattet ist, und dieser Schloßriegel eine Nadel (32) enthält, die zwischen den Positionen der Verriegelung und der Entriegelung des Schloßriegels beweglich ist,
**dadurch gekennzeichnet**, **daß**
die Sitzfläche (14) mit der Rückenlehne (16) mittels eines beweglichen Gestänges (46) für die Regulierung der Position der Sitzfläche (14) gegenüber der Position der Rückenlehne (16) verbunden ist, und dadurch, daß der Sitz außerdem Mittel (58) für die Fixierung des Reguliergestänges (46) aufweist, wenn sich die Rückenlehne (16) in einer Position befindet, die nicht geeignet ist, einen Fahrgast aufzunehmen und sich die Nadel (32) in ihrer entriegelten Position befindet.

2. Sitz nach Anspruch 1,
**dadurch gekennzeichnet**, **daß**
das Reguliergestänge (46) eine Gelenkspindel (52) aufweist, welche gleitend in eine an dem Sitzgestell (12) vorgesehene Führung (54) eingesetzt ist, und dadurch, daß die Mittel für die Verriegelung (58) einen Haken (60) aufweisen, welcher an dem Sitzgestell (12) zwischen den Positionen der Verriegelung und der Entriegelung der Gelenkspindel (52) schwenkbar montiert ist, sowie ein Gestänge (62) für die Übertragung der Bewegungen der Nadel (32) des Schloßriegels (28) vorgesehen ist, welches diese Nadel (32) mit dem Haken (60) verbindet, und daß die Nadel (32) mit Hilfe von Mitteln (34) elastisch in die verriegelte Position zurückgezogen wird, die gegen die Mittel (64) des elastischen Rückzugs des Hakens (60) in der verriegelten Position wirken, wobei die Rückzugkraft der Nadel (32) größer ist, als die Rückzugkraft des Hakens (60).

3. Sitz nach Anspruch 2,
**dadurch gekennzeichnet**, **daß**
das Betätigungsgestänge (62) eine Platte (66) für die Betätigung des Hakens (60) aufweist, die schwenkbar an dem Sitzgestell (12) montiert ist und einerseits mittels einer Koppelstange (68) mit der Nadel (32), und andererseits mittels eines Armes (70) mit dem Haken (60) verbunden ist, der drehbar an dem Haken befestigt ist.

4. Sitz nach Anspruch 3,
**dadurch gekennzeichnet**, **daß**
der Arm (70) über einen Schlitzes (72) mit der Platte (66) verbunden ist, der in diese Platte eingebracht ist und einen Totgang der Platte (66) und der Nadel (32) gegenüber dem Haken (60) ermöglicht.

5. Sitz nach einem der Ansprüche 3 oder 4,
**dadurch gekennzeichnet**, **daß**
einer der Fußteile (20) an dem Sitzgestell (12) zwischen der aktiven und der eingezogenen Position schwenkbar gelagert ist, wobei das Betätigungsgestänge (68) über einen Schlitzes (76) im Endabschnitt dieses Gestänges mit der Platte (66) verbunden ist, welcher beim Schwenken des Fußteils (20) einen Totgang des Übertragungsgestänges (68) gegenüber der Platte (66) ermöglicht.

6. Sitz nach einem der vorausgegangenen Ansprüche,
**dadurch gekennzeichnet**, **daß**
er Mittel (36) für die Betätigung der Entriegelung des Schloßriegels (28) mit einem Steuerknüppel (78) aufweist, welcher an der Rückenlehne (16) zwischen einer Nullstellung, in welche der Steuerknüppel (78) elastisch gedrückt wird, und einer aktiven Position schwenkbar montiert ist, wobei der Steuerknüppel (78) über ein Betätigungsgestänge (82) an die Nadel (32) des Schloßriegels angeschlossen ist.

7. Sitz nach Anspruch 6,
**dadurch gekennzeichnet**, **daß**
das Betätigungsgestänge (82) ein Zwischengestänge (84) aufweist, welches den Steuerknüppel (78) mit der Betätigungsplatte (66) verbindet.

8. Sitz nach Anspruch 7,
**dadurch gekennzeichnet**, **daß**
das Zwischengestänge (84) über einen Schlitz (92) mit der Platte (66) verbunden wird, welcher in diese Platte eingebracht ist, und der einen Totgang dieses Zwischengestänges (84) gegenüber der Platte ermöglicht, und dieser Totgang, wenn sich die Nadel (32) in der entriegelten Position befindet, die Rückkehr des Steuerknüppels (78) in die Nullstellung ermöglicht.

9. Sitz nach einem der vorausgegangenen Ansprüche,
**dadurch gekennzeichnet**, **daß**
er Mittel (96) für die Verriegelung des Steuerknüppels (78) aufweist, wenn sich die Rückenlehne (16) in einer Position befindet, die für die Aufnahme eines Fahrgastes geeignet ist.

10. Sitz nach Anspruch 9,
**dadurch gekennzeichnet**, **daß**
die Verriegelungsmittel (96) eine Gelenkspindel (98) des Betätigungsgestänges (82) enthalten, welche verschiebbar in zwei Schlitzen (100, 102) gelagert ist, die untereinander beweglich sind und von denen der eine von dem Sitzgestell (12) und der andere von dem Steuerknüppel (78) getragen wird, wobei die relative Ausrichtung der Blockierschlitze (100, 102) mit der Verschiebung der Gelenkspindel (98) kompatibel ist, welche sie nur dann führen, wenn sich die Rückenlehne (16) in einer Position befindet, die nicht geeignet ist, einen Fahrgast aufzunehmen.

11. Sitz nach einem der Ansprüche 7 bis 10,
**dadurch gekennzeichnet**, **daß**
einer der Fußteile den ersten der beiden seitlichen Fußteile (20) bildet, welche von dem Sitzgestell (12) getragen werden, wobei jeder der Fußteile (20) mit dem gleichen Schloßriegel (28) ausgestattet ist, und das Zwischengestänge (84) des ersten Fußteils (20) an einen Kurbelarm (88) angeschlossen ist, welcher schwenkbar an dem Sitzgestell (12) montiert und drehbar mit einer Kopplungsstange (90) des Zwischengestänges mit einem entsprechenden Betätigungsgestänge des Schloßriegels (28) des zweiten Fußteils (20) verbunden ist.

12. Sitz nach Anspruch 11,
**dadurch gekennzeichnet**, **daß**
die beiden seitlichen Fußteile (28) die hinteren Fußteile des Sitzes bilden, welche an dem Sitzgestell angelenkt sind, und daß der Sitz außerdem zwei vordere Fußteile (18) aufweist, die ebenfalls an dem Sitzgestell angelenkt sind, und daß Mittel (38) für die Regulierung der relativen Position der hinteren Fußteile (20) gegenüber dem Sitzgestell in der relativen Position der vorderen Fußteile (18) gegenüber diesem Sitzgestell vorgesehen sind.

13. Sitz nach einem der vorausgegangenen Ansprüche,
**dadurch gekennzeichnet**, **daß**
die Rückenlehne (16) in zwei aufeinanderfolgenden Positionen verstellbar ist, die geeignet sind, einen Fahrgast aufzunehmen.

14. Sitz nach einem der vorausgegangenen Ansprüche,
**dadurch gekennzeichnet**, **daß**
die Rückenlehne zwischen zwei aufeinanderfolgenden Positionen verstellbar ist, die nicht geeignet sind, einen Fahrgast aufzunehmen.
